# EUROPEAN PATENT APPLICATION

(11) **EP 3 451 251 A1**
(43) Date of publication of application: **06.03.2019**
(21) Application number: 18182276.8
(22) Date of filing: 06.07.2018
(51) Int. Cl.: G06Q 10/04

(54) **AIRCRAFT FLIGHT PLANNING APPARATUS AND METHOD**

(30) Priority: 30.08.2017 US 201715690909
(71) Applicant: The Boeing Company, Chicago, IL 60606-1596 (US)
(72) Inventor: Kneuper, Nils, Chicago, 60606-1596 (US); Shu-Zhong Cabos, Ralf René, Chicago, 60606-1596 (US)
(74) Representative: Witte, Weller & Partner Patentanwälte mbB

(57) **Abstract**

An aircraft flight planning apparatus (100A) includes a database (105A) and an aircraft flight planning apparatus (130A). The database (105A) includes a plurality of forecasting models (109A) configured to predict a predetermined characteristic (180) on which at least a portion of a flight plan (181) is based, and at least one data matrix of test predictions (111A-111n) for the predetermined characteristic (180) from each model (109A), each data matrix (111A-111n) includes a plurality of test data points (112A-112n). The aircraft flight planning controller (130A) is coupled to the database (105A), and is configured to receive analysis forecast data (140) having at least one analysis data point (141A-141n), select a model (110A-110n) based on a comparison between the analysis data point (141A-141n) and the test data points (112A-112n) of a respective model (110A-110n), and provide a prediction (180P) of the predetermined characteristic (180) with the model (110A-110n), from the plurality of forecasting models (109A), that corresponds to a test data point (112A-112n) that is representative of the analysis data point (141A-141n).

## Description

### BACKGROUND

### 1. Field

The aspects of the present disclosure generally relate to forecasting characteristics of future events and, in particular, to forecasting characteristics that affect aircraft flight plans.

### 2. Brief Description of Related Developments

Generally, aircraft flight planning is performed using data from multiple sources. These multiple sources include, but are not limited to, multiple predetermined flight paths and weather forecasts. The weather forecasts used for flight planning are generally determined by a weather forecasting computer that employs a weather forecasting model to analyze raw weather data, and re-analysis data, to generate a weather forecast. These weather forecasting computers that use weather forecasting models (which are generally a form of machine learning) to generate weather forecasts, especially when historical weather data is taken into account, general peak at about a 60% accuracy on a test data set with normal accuracy ranges between about 35% and about 50%. This accuracy may be due to, for example, the highly volatile and complex nature of weather patterns which make it difficult to model the dynamics of the weather at any given time. Generally, when generating weather forecasts, the weather forecasting computer uses a single weather forecasting model to generate an entire weather forecast, regardless of whether that single machine learning model is best for all periods for which the weather forecast applies. The weather forecasting model used is one that is expected/predicted to provide the best overall result. For example, weather forecast model A may provide about a 60% accuracy for a set of weather data and weather forecast model B may provide about a 35% accuracy for the same set of weather data. As such, weather forecast model A is used for the entire weather forecast even though weather forecast model A may have optimal and non-optimal areas with respect to the weather forecast (e.g., weather forecast model B may be more optimal in some areas of the forecast than weather forecast model A but is still ignored when generating the weather forecast). This generally tends to decrease the accuracy of the weather forecast. Further, each forecast model (e.g., forecast model A and forecast model B) each create different forecasts, each of which may be more optimal in some areas than others may leave one to guess which forecast model (e.g., forecast model A or forecast model B) is the most accurate.

In addition, the predetermined flight paths are generally selected from a number of flight paths generated by different flight planning models of an aircraft flight planning computer. These flight paths are generally determined well before a respective flight is released for departure. However, in some instances, flight paths may change during flight. For example, a new flight path may be selected if an unexpected weather event occurs.

While multiple predicted flight paths may be determined by different flight planning models and presented to the pilot of the aircraft and/or to air traffic control, the pilot and/or air traffic control generally do not know which of these predicted flight paths is the best flight path. Again, the above are just a few examples of what aircraft flight planning entails.

### SUMMARY

The following is a non-exhaustive list of examples, which may or may not be claimed, of the subject matter according to the present disclosure.

One example of the subject matter according to the present disclosure relates to an aircraft flight planning apparatus comprising: a database including a plurality of forecasting models configured to predict a predetermined characteristic on which at least a portion of an aircraft flight plan is based, and at least one data matrix of test predictions for the predetermined characteristic from each of the plurality of forecasting models, each of the at least one data matrix of test prediction includes a plurality of test prediction data points; and an aircraft flight planning controller coupled to the database, the aircraft flight planning controller being configured to receive analysis forecast data having at least one analysis data point, select a forecasting model, from the plurality of forecasting models, based on a comparison between the at least one analysis data point and the plurality of test prediction data points of a respective forecasting model, and provide a prediction of the predetermined characteristic with the forecasting model, selected from the plurality of forecasting models, that corresponds to a test prediction data point that is representative of the at least one analysis data point.

Another example of the subject matter according to the present disclosure relates to a method for aircraft flight planning, the method comprising: receiving, with an aircraft flight planning controller, analysis forecast data having at least one analysis data point; selecting, with the aircraft flight planning controller, a forecasting model, from a plurality of forecasting models, based on a comparison between the at least one analysis data point and a plurality of test prediction data points within a respective data matrix of test predictions, wherein at least one data matrix of test predictions is stored in a database accessible by the aircraft flight planning controller; and predicting, with the aircraft flight planning controller, a predetermined characteristic with the forecasting model selected from the plurality of forecasting models, wherein the forecasting model predicts the predetermined characteristic on which at least a portion of an aircraft flight plan is based.

Still another example of the subject matter according to the present disclosure relates to a method for aircraft flight planning, the method comprising: training a plurality of forecasting models, with common training data, where each of the plurality of forecasting models is stored in a database and trained to predict a predetermined characteristic on which at least a portion of an aircraft flight plan is based; determining at least one data matrix of test predictions for the predetermined characteristic from each of the plurality of forecasting models, the at least one data matrix of test predictions being stored in the database; receiving, with an aircraft flight planning controller, analysis forecast data having at least one analysis data point; determining, with the aircraft flight planning controller, a test prediction data point from a plurality of test prediction data points within a respective data matrix of test predictions that is representative of the at least one analysis data point when compared to other test prediction data points of the plurality of test prediction data points, wherein at least one data matrix of test predictions is accessible by the aircraft flight planning controller so that one of the plurality of forecasting models, that corresponds to the test prediction data point that is representative of the at least one analysis data point, is dynamically determined as updated analysis forecast data is received by the aircraft flight planning controller; and predicting, with the aircraft flight planning controller, the predetermined characteristic with the one of the plurality of forecasting models, wherein the one of the plurality of forecasting models predicts the predetermined characteristic on which at least a portion of an aircraft flight plan is based.

Yet another example of the subject matter according to the present disclosure relates to an aircraft flight planning apparatus comprising: a database including a plurality of forecasting models configured to predict at least one predetermined characteristic on which at least a portion of an aircraft flight plan is based, and at least one data matrix of test predictions for the at least one predetermined characteristic from each of the plurality of forecasting models, each of the at least one data matrix of test predictions includes a plurality of test prediction data points; and an aircraft flight planning controller coupled to the database, the aircraft flight planning controller being configured to receive analysis forecast data having at least a first analysis data point and a second analysis data point; determine a test prediction data point from a plurality of test prediction data points within a respective data matrix of test predictions that is representative of the first analysis data point when compared to other test prediction data points of the plurality of test prediction data points; and provide a prediction of the at least one of the predetermined characteristic with a forecasting model, of the plurality of forecasting models, that corresponds to the test prediction data point that is representative of the first analysis data point.

Another example of the subject matter according to the present disclosure relates to a weather forecasting apparatus comprising: a database including a plurality of forecasting models configured to predict a predetermined characteristic on which at least a portion of a weather forecast is based, at least one data matrix of test predictions for the predetermined characteristic from each of the plurality of forecasting models; and a weather forecasting controller coupled to the database, the weather forecasting controller being configured to receive analysis forecast data having at least one analysis data point, select a forecasting model, from the plurality of forecasting models, based on a comparison between the at least one analysis data point and the plurality of test prediction data points, and provide a prediction of the predetermined characteristic with the forecasting model, from the plurality of forecasting models, that corresponds to the test prediction data point that is representative of the at least one analysis data point.

Still another example of the subject matter according to the present disclosure relates to a method for weather forecasting, the method comprising: receiving, with a weather forecasting controller, analysis forecast data having at least one analysis data point; selecting, with the weather forecasting controller, a forecasting model, from a plurality of forecasting models, based on a comparison between the at least one analysis data point and a plurality of test prediction data points within a respective data matrix of test predictions, wherein at least one data matrix of test predictions is stored in a database accessible by the weather forecasting controller; and predicting, with the weather forecasting controller, a predetermined characteristic with the forecasting model, wherein the forecasting model predicts the predetermined characteristic on which at least a portion of a weather forecast is based.

Yet another example of the subject matter according to the present disclosure relates to a method for forecasting weather, the method comprising: training a plurality of forecasting models, with common training data, where each of the plurality of forecasting models is stored in a database and trained to predict a predetermined characteristic on which at least a portion of a weather forecast is based; determining at least one data matrix of test predictions for the predetermined characteristic from each of the plurality of forecasting models, the at least one data matrix of test predictions being stored in the database; receiving, with a weather forecasting controller, analysis forecast data having at least one analysis data point; determining, with the weather forecasting controller, a test prediction data point from a plurality of test prediction data points within a respective data matrix of test predictions that is representative of the at least one analysis data point when compared to other test prediction data points of the plurality of test prediction data points, wherein at least one data matrix of test predictions is accessible by the weather forecasting controller so that one of the plurality of forecasting models, that corresponds to the test prediction data point that is representative of the at least one analysis data point, is dynamically determined as updated analysis forecast data is received by the weather forecasting controller; and predicting, with the weather forecasting controller, the predetermined characteristic with the one of the plurality of forecasting models, wherein the one of the plurality of forecasting models predicts the predetermined characteristic on which at least a portion of a weather forecast is based.

### BRIEF DESCRIPTION OF THE DRAWINGS

Having thus described examples of the present disclosure in general terms, reference will now be made to the accompanying drawings, which are not necessarily drawn to scale, and wherein like reference characters designate the same or similar parts throughout the several views, and wherein:
Fig. 1A is a schematic block diagram of an aircraft flight planning apparatus in accordance with aspects of the present disclosure;
Fig. 1B is a schematic block diagram of a weather forecasting apparatus in accordance with aspects of the present disclosure;
Fig. 2 is a flow diagram for predicting a predetermined characteristic with a selected forecasting model in accordance with aspects of the present disclosure;
Fig. 3 is an exemplary graphical illustration of forecasting model training in accordance with aspects of the present disclosure;
Fig. 4 is an exemplary graphical illustration of predetermined characteristic prediction using the exemplary forecasting model of Fig. 3 in accordance with aspects of the present disclosure;
Fig. 5 is an exemplary illustration of exemplary prediction accuracy ranges of the exemplary forecasting model of Fig. 3 in accordance with aspects of the present disclosure;
Fig. 6 is an exemplary graphical illustration of a plurality of forecasting models being applied to a common set of data in accordance with aspects of the present disclosure;
Fig. 7 is a flow diagram of a method for selecting a forecasting model in accordance with aspects of the present disclosure;
Fig. 8 is an exemplary graphical illustration corresponding to the determination of more than one representative test prediction data points in accordance with aspects of the present disclosure; and
Fig. 9 is a graphical illustration of a plurality of flight paths in accordance with aspects of the present disclosure.

### DETAILED DESCRIPTION

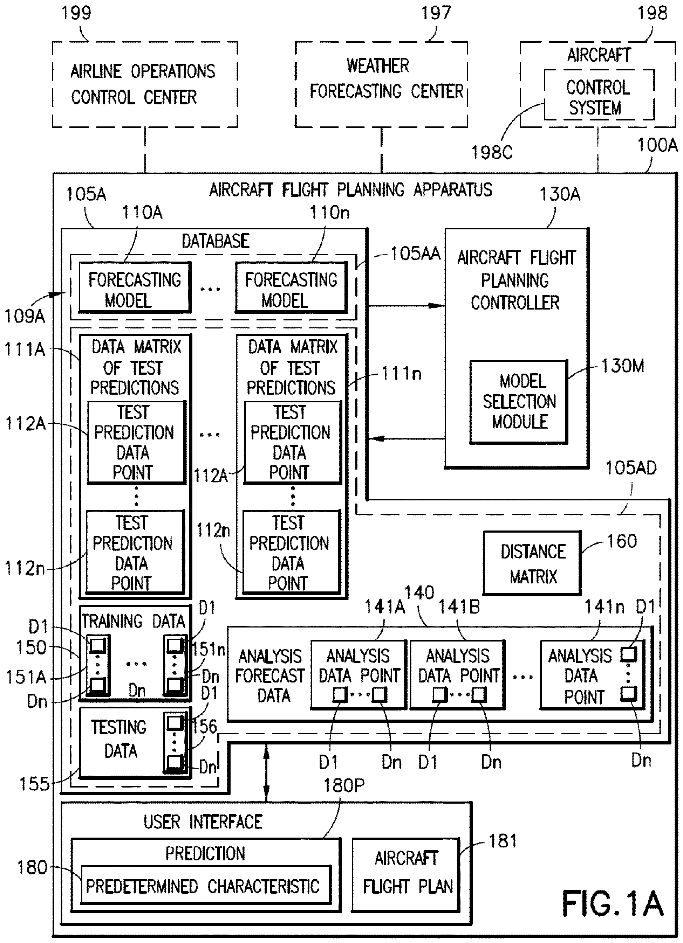

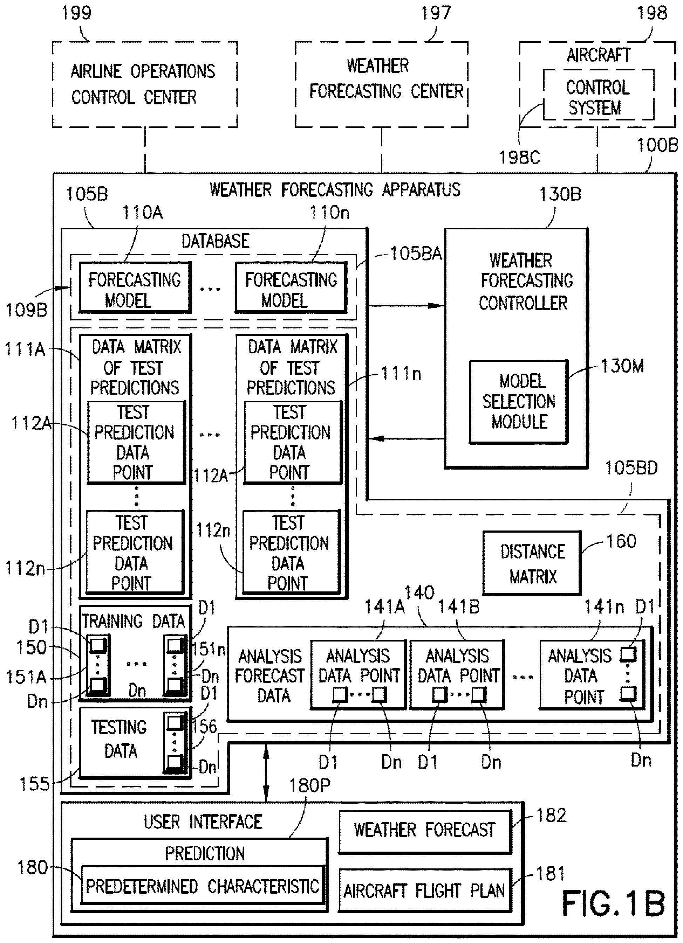

Referring to Figs. 1A and 1B, aspects of the present disclosure provide an aircraft flight planning apparatus 100A that is configured to select different machine learning models for predicting a (or at least one) predetermined characteristic 180 pertaining to flight planning. As used herein the term "flight planning" includes the prediction of at least, one or both of weather forecasts and flight paths. As such, the predetermined characteristic 180 may include one or both of at least a portion of a weather forecast and a flight path. In one particular aspect of the present disclosure, where flight planning is not desired, the aspects of the present disclosure may be applied to a weather forecasting apparatus 100B which is similar to the flight planning apparatus 100A except for the ability to predict flight paths. For example, a difference between the aircraft flight planning apparatus 100A and the weather forecasting apparatus 100B is in forecasting models 110A-110n, such that the flight planning apparatus 100A includes forecasting models 110A-110n for at least both weather forecasting and flight planning, whereas the weather forecasting apparatus 100B includes forecasting models 110A-110n for at least weather forecasting. However, the aspects of the present disclosure are not limited to flight planning and may be used in any apparatus that forecasts predetermined characteristics which may vary over time and for which a single machine learning model is generally unsuited for the entire time period and/or all data points for which the forecast is being generated. Further, while aspects of the present disclosure are described with respect to an aircraft 198, aspects of the present disclosure may be applied to any suitable aerospace, maritime and/or automotive vehicle, whose operation may be impacted by weather and/or different operating paths.

Generally, the flight planning apparatus 100A may be part of an airline operations control center 199 and/or a part of a control system 198C onboard any suitable aircraft 198. In the case of weather forecasting apparatus 100B, the weather forecasting apparatus may be part of the airline operations control center 199, part of the control system 198C onboard any suitable aircraft 198 and/or part of a weather forecasting center 197. The flight planning apparatus 100A includes a database 105A and an aircraft flight planning controller 130A, while the weather forecasting apparatus 100B includes a database 105B and a weather forecasting controller 130B. Due to the similarities between the aircraft flight planning apparatus 100A and the weather forecasting apparatus 100B, the aircraft flight planning controller 130A and the weather forecasting controller 130B will be referred to generally as controller 130A, 130B (e.g., a difference being the aircraft flight planning controller includes non-transitory computer program code for determining at least both weather forecasts and flight paths, while the weather forecasting controller includes non-transitory computer program code for determining at least weather forecasts). The databases 105A, 105B, are defined as any number of suitable non-transitory storage locations that are accessible by at least the respective controller 130A, 130B where each non-transitory storage location includes one or more of a model storage 105AA, 105BA and data storage 105AD, 105BD. The model storage 105AA, 105BA is defined as a non-transitory storage in which the plurality of forecasting models 109A, 109B are stored in one or more of the following ways: as separate files each having a unique tag where the tag identifies a geographical area (e.g., longitude, latitude, altitude) in which the respective forecasting model 110A-110n applies; as a structured set of data; as a semi-structured set of data; as an unstructured set of data; and/or as applications.

Still referring to Figs. 1A and 1B, the database 105A, 105B includes a plurality of forecasting models 109A, 109B where each forecasting model 110A-110n is different from every other forecasting model 110A-110n in the plurality of forecasting models 109A, 109B. Each of the plurality of forecasting models 109A, 109B is configured to predict a predetermined characteristic 180 on which at least a portion of an aircraft flight plan 181 is based. The database 105A, 105B also includes at least one data matrix of test predictions 111A-111n for the predetermined characteristic 180 from each of the plurality of forecasting models 109A, 109B. For example, the data matrix of test predictions 111A may correspond to forecasting model 110A and the data matrix of test predictions 111n may correspond to forecasting model 110n. As described above, plurality of forecasting models 109A of the aircraft flight planning apparatus 100A includes forecasting models 110A-110n for at least both weather forecasting and flight planning. The plurality of forecasting models 109B of the weather forecasting apparatus 100B includes forecasting models 110A-110n for at least weather forecasting.

The controller 130A, 130B is coupled to the database 105A, 105B. The controller 130A, 130B includes a model selection module 130M so that the controller 130A, 130B, through the model selection module 130M, is configured to receive analysis forecast data 140 having at least one analysis data point 141A-141n. As an example, the analysis forecast data 140 includes at least a first analysis data point 141A and a second analysis data point 141B. The controller 130A, 130B, through the model selection module 130M, is also configured to select a forecasting model 110A-110n, from the plurality of forecasting models 109A, 109B, based on a comparison between the at least one analysis data point 141A-141n and a plurality of test prediction data points 112A-112n of a respective forecasting model 110A-110n. The controller 130A, 130B is configured to provide a prediction 180P of the predetermined characteristic 180 with the forecasting model 110A-110n, selected from the plurality of forecasting models 109A, 109B, that corresponds to a test prediction data point 112A-112n that is representative of the at least one analysis data point 141A-141n.

As can be seen above, and as described further herein, aspects of the present disclosure provide for a determination/selection of one or more forecasting models 110A-110n for generating a prediction 180P of the predetermined characteristic 180. The selection of the one or more forecasting models 110A-110n is based on, for example, which of the plurality of forecasting models 109A, 109B produces a predicted test prediction data point 112A-112n that is representative of the analysis data point 141A-141n of the analysis forecast data 140. Here, more than one forecasting model 110A-110n may be selected for use in a single prediction 180P based on the comparisons between each of the analysis data points 141A-141n and the test prediction data points 112A-112n. For example, a first one of the forecasting models 110A-110n may provide results that are similar to or representative of one or more analysis data points 141A-141n while a second one of the forecasting models 110A-110n may provide results that are similar to or representative of different analysis data points 141A-141n, where the first and second forecasting models are used in combination to form a comprehensive prediction for the analysis forecast data 140. The determination/selection of different forecasting models 110A-110n based on the individual analysis data points 141A-141n provides for the use of a forecasting model 110A-110n for any given analysis data point 141A-141n that has the highest probability of producing an accurate prediction (when compared to the other forecasting models) for that analysis data point 141A-141n.

Each of the plurality of forecasting models 109A, 109B is configured to analyze data sets, such as the analysis forecast data 140, training data 150, and testing data 155, where the testing data 155 has at least one testing data point 156. Each data point (e.g., the analysis data points 141A-141n, the training data points 151A-151n, and the at least one testing data point 156) in the data sets has multiple dimensions or variables D1-Dn. In one aspect, the multiple dimensions D1-Dn include one or more of at least air temperature, altitude, wind speed, wind direction, barometric pressure and humidity which may be used for generating weather forecasts. In another aspect, the multiple dimensions D1-Dn include one or more of aircraft traffic flow, wind speed, wind direction, existence of extreme weather, time of day, season of the year, visibility, aircraft holding patterns, emergency situations, and accumulated flight delays.

Each forecasting model 110A-110n of the plurality of forecasting models 109A, 109B comprise any suitable machine learning models (e.g. decision tree, random forest algorithm, polynomial fit, k-nearest neighbors, etc.). As described above, each forecasting model 110A-110n of the plurality of forecasting models 109A, 109B is different from every other forecasting model 110A-110n in the plurality of forecasting models 109A, 109B. For example, each of the plurality of forecasting models 109A, 109B comprises a machine learning model that is different from a machine learning model of every other forecasting model 110A-110n in the plurality of forecasting models 109A, 109B. Each of the forecasting models 110A-110n are trained using training data 150 and tested using test data 155, where the training data and/or test data 155 is common to all of the forecasting models 110A-110n of the plurality of forecasting models 109A, 109B (i.e., the forecasting models 110A-110n are all trained using the same training data 150 and tested using the same test data 155). The same/common training data 150 and/or test data 155 is used to train and test all of the forecasting models so that a quality of test prediction data points 112A-112n, for the respective data matrix of test predictions 111A-111n of the plurality of forecasting models 109A, 109B, is substantially the same. Having test prediction data points 112A-112n of the same quality provides for the creation of the test prediction data points 112A-112n of the at least one data matrix of test predictions 111A-111n under the same conditions so that, when matched to the analysis data point(s) 141A-141n (as described herein), the accuracy of forecasting model 110A-110n selection for any given analysis data point 141A-141n by the model selection module 130M of the controller 130A, 130B is increased when compared to a selection of forecasting models that are trained using different data sets for one or more of the forecasting models. Each of the at least one data matrix of test predictions 111A-111n for the predetermined characteristic 180 is generated by applying the testing data 155 to the forecasting models 110A-110n. The testing data 155 is common to the forecasting models 110A-110n so that the same testing data 155 (e.g., the same testing data for weather forecasting and/or flight paths) is used to test all of the forecasting models 110A-110n for every test data point 156 of the testing data 155. The result of applying the testing data 155 to the forecasting models 110A-110n is a data matrix of test predictions 111A-111n for each forecasting model 110A-110n.

The controller 130A, 130B is configured to select the forecasting model 110A-110n by determining a test prediction data point 112A-112n from a plurality of test prediction data points 112A-112n within a respective data matrix of test predictions 111A-111n that is representative of the at least one analysis data point 141A-141n when compared to other test prediction data points 112A-112n of the plurality of test prediction data points 112A-112n. For example, the controller 130A, 130B is configured to determine the test prediction data point 112A-112n from the data matrix of test predictions 111A-111n that is representative of (or most similar to) the at least one analysis data point 141A-141n by creating a distance matrix 160 (described in greater detail below) to identify which of the plurality of test prediction data points 112A-112n has a smallest distance to the at least one analysis data point 141A-141n. In other words, a given data matrix of test predictions 111A-111n is representative of (or most similar to) the analysis data point 141A-141n when a valued deviation between the analysis data point 141A-141n and the test prediction data point 112A-112n for the given data matrix of test predictions 111A-111n is smaller than another valued deviation between the analysis data point 141A-141n and another test prediction data point 112A-112n of another data matrix of test predictions 111A-111n. The controller 130A, 130B selects a forecasting model 110A-110n for each analysis data point 141A-141n. For example, a test prediction data point 112A-112n from the plurality of test prediction data points 112A-112n within a respective data matrix of test predictions 111A-111n is determined that is representative of the first analysis data point 141A when compared to other test prediction data points 112A-112n of the plurality of test prediction data points 112A-112n. Similarly, a test prediction data point 112A-112n from the plurality of test prediction data points 112A-112n within a respective data matrix of test predictions 111A-111n is determined that is representative of the second analysis data point 141B when compared to other test prediction data points 112A-112n of the plurality of test prediction data points 112A-112n.

Based on the determination of the test prediction data point 112A-112n that is representative of a respective analysis data point 141A-141n, the controller 130A, 130B selects the forecasting model 110A-110n corresponding to the test prediction data point 112A-112n that is representative of the respective analysis data point 141A-141n and provides a prediction of the predetermined characteristic 180 with the forecasting model 110A-110n, selected from the plurality of forecasting models 109A, 109B, that corresponds to the test prediction data point 112A-112n that is representative of the respective analysis data point 141A-141n. For example, if test prediction data point 112A of the data matrix of test predictions 111A is representative of analysis data point 141A then the forecasting model 110A (which corresponds to the data matrix of test predictions 111A) is selected for the prediction of the predetermined characteristic 180 using the analysis data point 141A as input to the forecasting model 110A. Likewise, if test prediction data point 112n of the data matrix of test predictions 111n is representative of analysis data point 141B then the forecasting model 110n (which corresponds to the data matrix of test predictions 111n) is selected for the prediction of the predetermined characteristic 180 using the analysis data point 141B as input to the forecasting model 110n. While the above example, illustrates that different forecasting models 110A-110n may be selected for the at least one analysis data point 141A-141n based on the respective similarities to the test prediction data points 112A-112n (e.g., the forecasting model 110A-110n that corresponds to the test prediction data point 112A-112n that is representative of the second analysis data point 141B is different than the a forecasting model 110A-110n that corresponds to the test prediction data point 112A-112n that is representative of the first analysis data point 141A), in some instances the same forecasting model 110A-110n may be selected for different analysis data points 141A-141n. For example, depending on the similarities between the analysis data points 141A, 141B and the test prediction data points 112A-112n, the forecasting model 110A-110n that corresponds to the test prediction data point 112A-112n that is representative of the second analysis data point 141B is the same as the a forecasting model 110A-110n that corresponds to the test prediction data point 112A-112n that is representative of the first analysis data point 141A.

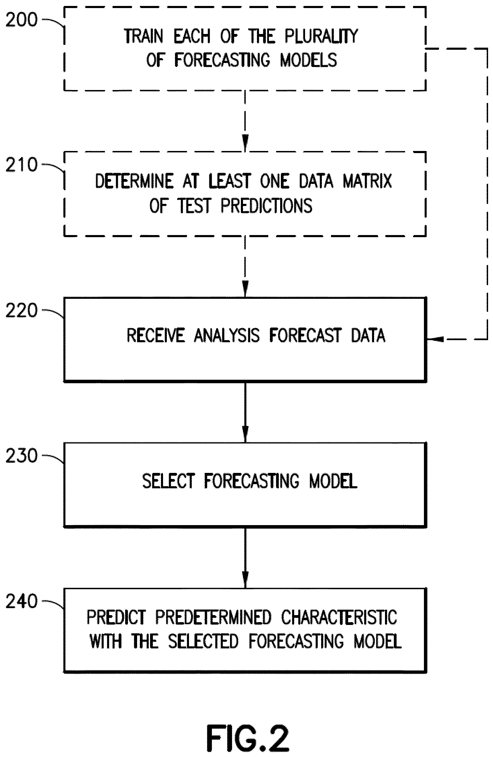

Referring to Figs. 1A, 1B, and 2 the aircraft flight planning apparatus 100A and/or weather forecasting apparatus 100B determine/select the best forecasting model 110A-110n to use for predicting the predetermined characteristic 180 in the vicinity in which the analysis data point 141A-141n being analyzed falls (e.g., the range of the dimensions in the test prediction data points 112A-112n for the selected forecasting model 110A-110n correspond with the values of the dimensions in the analysis data point 141A-141n being analyzed). One example of the forecasting model 110A-110n selection and prediction of the predetermined characteristic 180 is provided with respect to Figs. 1A, 1B, and 2 for both the aircraft flight planning apparatus 100A and the weather forecasting apparatus 100B. In this example, the predetermined characteristic 180 being predicted is wind speed however; any other suitable meteorological variable may be predicted. Here the forecasting models 110A-110n are trained in any suitable manner (Fig. 2, Block 200), with the training data 150, so as to predict the predetermined characteristic 180 on which at least a portion of an aircraft flight plan 181 is based. Here, because weather forecasting is being described as an example, only common weather forecasting data is used to train at least one of the forecasting models 110A-110n of the plurality of forecasting models 109A, 109B used for forecasting weather. Where both weather forecasts and flight plans are being predicted, common weather forecasting data is used to train at least one of the forecasting models 110A-110n of the plurality of forecasting models 109A, 109B used for weather forecasting and common flight planning data is used to train at least one of the forecasting models 110A-110n of the plurality of forecasting models 109A, 109B used for flight planning. In one aspect, the weather forecasting data may be the same data as the flight planning data, so that each of the plurality of forecasting models 109A, 109B are trained using training data common to all of the plurality of forecasting models 109A, 109B.

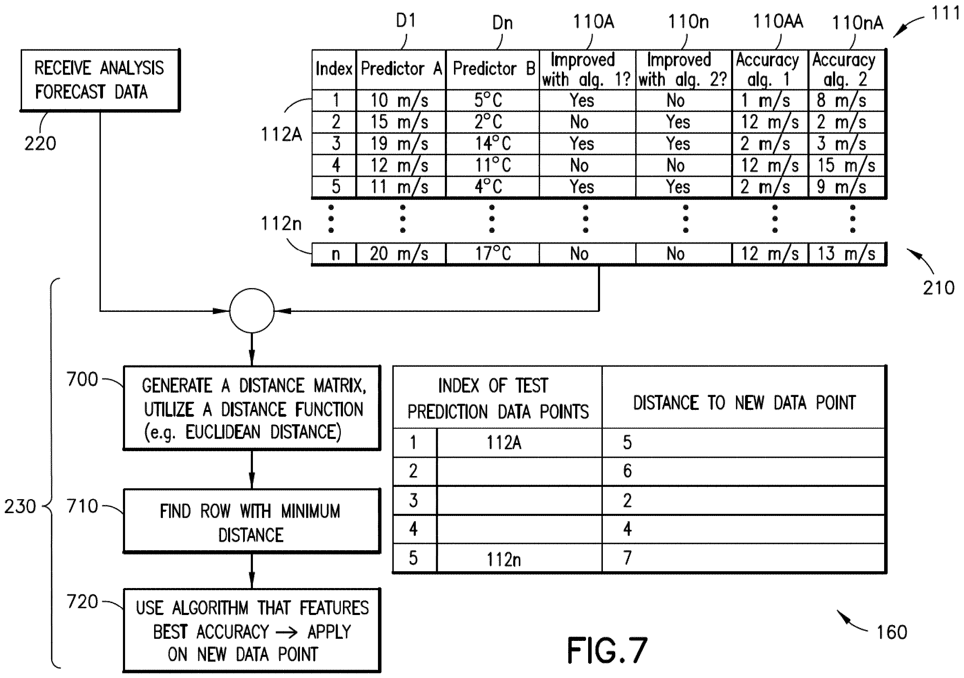

At least one data matrix of test predictions 111A-111n is determined (Fig. 2, Block 210) for the predetermined characteristic 180 from each of the plurality of forecasting models 109A, 109B, where the at least one data matrix of test predictions 111A-111n is stored in the database 105A, 105B. The at least one data matrix of test predictions 111A-111n is generated by applying the testing data 155 (which is common to all of the forecasting models 110A-110n as described herein) to the respective forecasting model 110A-110n. An exemplary data matrix of test predictions 111 of the at least one data matrix of test predictions 111A-111n is illustrated in Fig. 7. As can be seen in Fig. 7, the data matrix of test predictions 111 includes an index of data points 156A-156n of the test data 155, the dimensions D1-Dn of the respective data points 156A-156n, an indication of whether the prediction accuracy improved with the respective forecasting models 110A-110n and an accuracy 110AA-110nA of the prediction of the respective forecasting models 110A-110n. Each data matrix of test predictions 111A-111n records how well each of the forecasting models 110A-110n improved the prediction of each testing data point 156 of the testing data 155 (where the training data 150 may be periodically updated, as values for predicted predetermined characteristics 180 are verified with actual measured values corresponding to the predictions). The forecasting models 110A-110n may also be periodically re-trained as the predicted predetermined characteristics 180 are verified where, for example, the training data set 150 is updated to include the verified predetermined characteristics 180. Likewise, the data matrix of test predictions 111A-111n corresponding to the respective forecasting models 110A-110n may also be re-generated based on the re-trained forecasting models 110A-110n to improve the accuracy of the predicted 180P predetermined characteristics 180 when compared to the same forecasting models 110A-110n prior to re-training.

The controller 130A, 130B receives analysis forecast data 140 (Fig. 2, Block 220) having at least one analysis data point 141A-141n. The analysis forecast data 140 may be obtained by the controller 130A, 130B from any suitable data source such as the airline operation control center 199, sensors onboard the aircraft 198, any suitable weather data center, airport control tower, etc. The controller 130A, 130B selects a forecasting model 110A-110n from the plurality of forecasting models 109A, 109B (Fig. 2, Block 230).

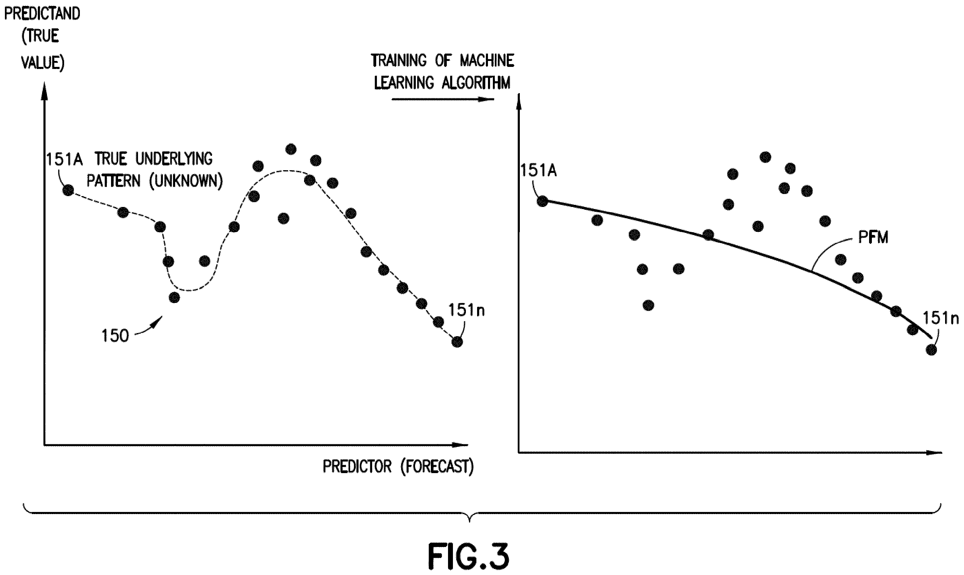

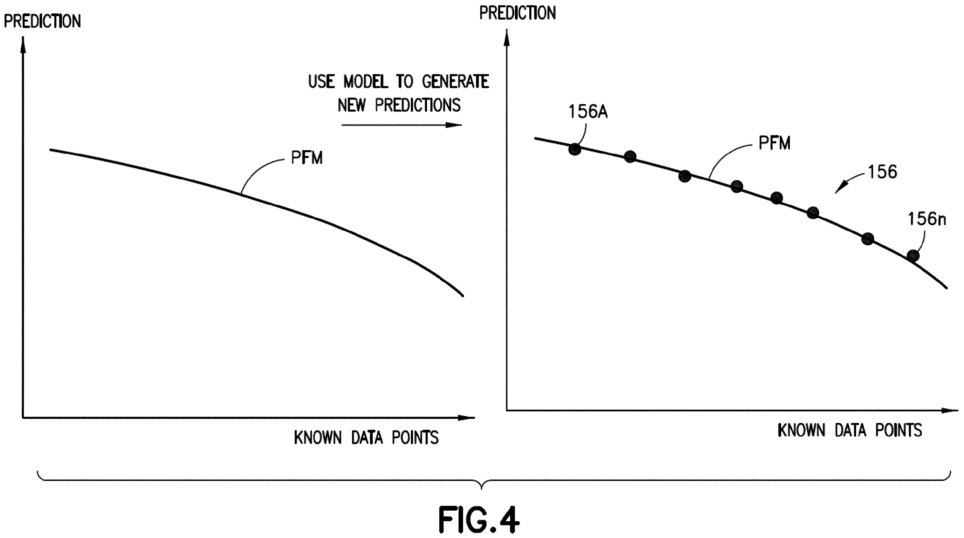

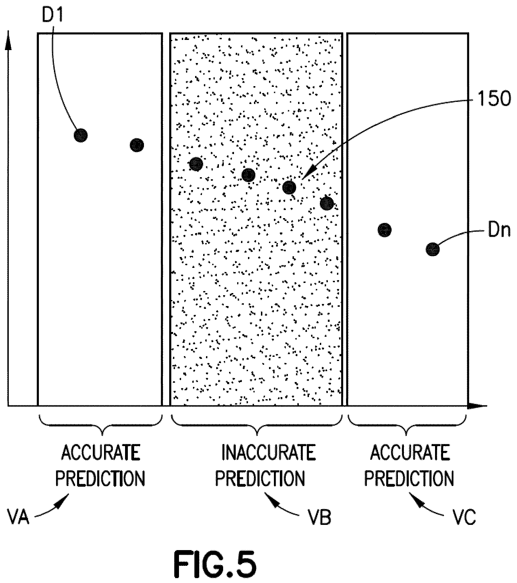

As described above, each of the forecasting models 110A-110n have their strengths and weaknesses where one of the forecasting models 110A-110n may be more accurate than other forecasting models 110A-110n for a particular range of data values. For example, referring to Fig. 3, the training of one of the forecasting models 110A-110n (e.g., such as a polynomial fit forecast model PFM) is illustrated using training data 150. The result of the training, as illustrated in Fig. 4, may result in a trained polynomial fit forecasting model PFM (which may be one of the plurality of forecasting models 109A, 109B) that is used to generate predictions on one or more of the analysis data points 141A-141n of the analysis forecast data 140. However, considering the training data 150 illustrated in Fig. 3, it is apparent from Fig. 3 that the polynomial fit forecasting model PFM may not be accurate with respect to at least one data point (or dimensions D1-Dn) of the testing data 155 and/or analysis forecast data 140. Fig. 5 illustrates value ranges VA, VC for which the polynomial fit forecasting model PFM may provide accurate predictions for the testing data 155 and/or the analysis forecast data 140. Fig. 5 also illustrates value ranges VB for which the polynomial fit forecasting model PFM may provide inaccurate predictions for the testing data 155 and/or the analysis forecast data 140. While Fig. 4 illustrates application of the polynomial fit forecasting model PFM to the testing data points 156A-156n of the testing data 155 in other aspects, the polynomial fit forecasting model PFM may be applied to analysis data points 141A-141n in a similar manner.

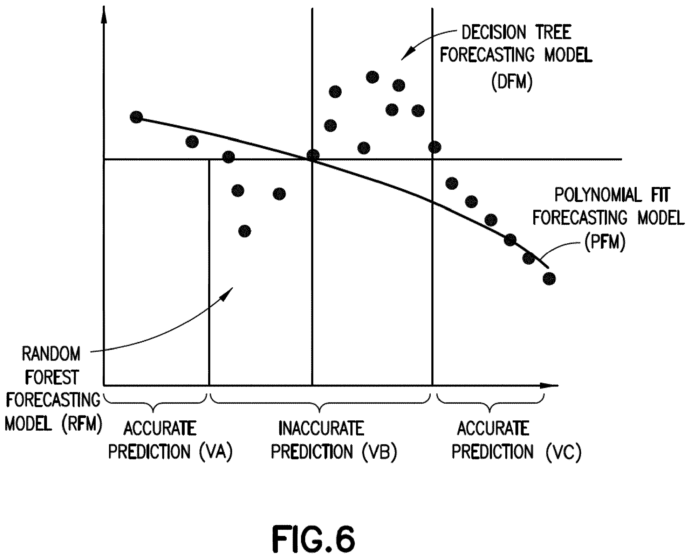

Referring to Figs. 1A, 1B, 6, and 7, it is illustrated in Fig. 6 that other forecasting models 110A-110n (such as a decision tree forecasting model DFM and/or random forest forecasting model RFM) of the plurality of forecasting models 109A, 109B may provide better prediction accuracy when compared to the polynomial fit forecasting model PFM for predicting the testing data 155 and/or the analysis forecast data 140 in the value region VB. Accordingly, in accordance with aspects of the present disclosure, the controller 130A, 130B predicts a forecasting model 110A-110n (Fig. 2, Block 230), from the plurality of forecasting models 109A, 109B, based on a comparison between the at least one analysis data point 141A-141n and the plurality of test prediction data points 112A-112n within a respective data matrix of test predictions 111A-111n. Referring to the data matrix of test predictions 111 in Fig. 7, in one aspect the forecasting method 110A-110n may be selected by the controller 130A, 130B based on which algorithm improved the prediction accuracy of the testing data point 156 the most. As an example, suppose analysis data point 141A has predictor (dimension) values of 14 m/s and 1°C. This analysis data point 141A is representative of the test data point 112A-112n in the data matrix of test predictions 111 shown in Fig. 7 having index number 2. In this example, if the forecasting model corresponding to "Alg. 1" in the data matrix of test predictions 111 were used directly on the analysis data point 141A, the forecasting model corresponding to "Alg. 1" would have most likely not improved the prediction 180P of the predetermined characteristic 180. This is because, as shown in the data matrix of test predictions 111, the forecasting model corresponding to "Alg. 1" did not improve the predicted value of the testing data point having index number 2. Instead, the forecasting model corresponding to "Alg. 2" should be used to predict the predetermined characteristic based on the testing data point 141A as the forecasting model corresponding to "Alg. 2" also improved the predicted value of the testing data point having index number 2. As another example, referring to Figs. 1A, 1B, and 7, the test prediction data point 112A-112n from the data matrix of test predictions 111 that is representative of the at least one analysis data point 141A-141n is determined by creating a distance matrix 160 to identify which of the plurality of test prediction data points 112A-112n has a smallest distance to the at least one analysis data point 141A-141n. The distance matrix 160 is generated (Fig. 7, Block 700) using any suitable distance function, such as for example, a Euclidean distance. The distance matrix 160 is illustrated in Fig. 7 and includes an index of test prediction data points 112A-112n that corresponds to the index of test prediction data points 112A-112n of the data matrix of test predictions 111 and a distance between the analysis data point 141A-141n being analyzed (which in this example is analysis data point 141A) and a respective one of the test prediction data points 112A-112n. The controller 130A, 130B determines the row in the distance matrix 160 that has the smallest (e.g., a minimum) distance (Fig. 7, Block 710) and selects the forecasting model 110A-110n that corresponds with the smallest distance to predict the predetermined characteristic 180 based on analysis data point 141A.

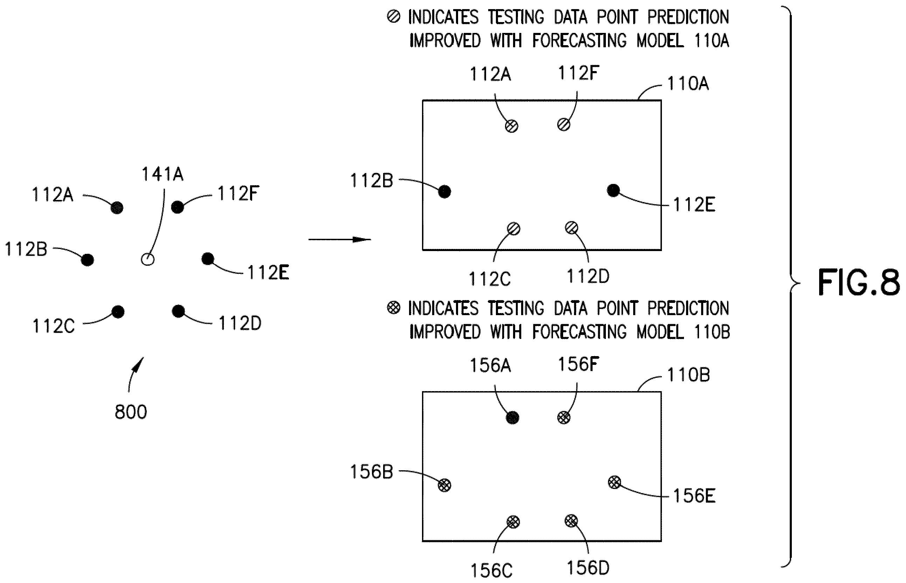

In one aspect, more than one similar or representative test prediction data point 112A-112n can be determined to select one or more forecasting models 110A-110n that improved the representative test prediction data points. Referring to Figs. 1A, 1B and 8, if, for example, three representative test prediction data points were improved with a same/common forecasting model 110A-110n, it can be deduced by the controller 130A, 130B that this common forecasting model 110A-110n is well suited for making predictions 180P of the predetermined characteristic 180 in the vicinity of the three representative test prediction data points. An example of determining more than one representative test prediction data point 112A-112n is illustrated in Fig. 8, where the cluster of points 800 illustrate the analysis data point 141A being analyzed, along with the six representative (or most similar) test prediction data points 112A1-112A6 as determined with any suitable classification, such as K-nearest neighbors. Here only two forecasting models 110A, 110B are illustrated for exemplary purposes only; however, there may be any suitable number of forecasting models. As illustrated in Fig. 8, prediction of only test prediction data points 112A, 112C, 112D, and 112F are improved with forecasting model 110A, while prediction of test prediction data points 112A-112F are improved with forecasting model 110B. Here, the controller 130A, 130B selects forecasting model 110B because forecasting model 110B provides more accurate and more stable results than forecasting model 110A for predetermined characteristic 180 in the vicinity of values corresponding to the analysis data point 141A.

It should be understood that the K-nearest neighbors and numerical value similarity determinations described above are exemplary only. However, similarity may vary from case to case (such as where the predetermined characteristic 180 being predicted is something other than weather forecast related or flight path related). As such, the similarity between the test prediction data points 112A-112n and the analysis data points 141A-141n can in, one aspect, be determined in a categorical or temporal context. For example, in the examples provided above, the similarities may be determined by in the context of a time of year (e.g., month or season), where the test prediction data points 112A-112n of a respective one of the at least one data matrix of test predictions 111A-111n may be different for different times of the year. In addition, at least one data matrix of test predictions 111A-111n is accessible by the controller 130A, 130B so that one of the forecasting models 110A-110n of the plurality of forecasting models 109A, 109B, that corresponds to the test prediction data point 112A-112n that is representative of the at least one analysis data point 141A-141n, is dynamically determined as updated analysis forecast data 140 is received by the controller 130A, 130B.

The predetermined characteristic 180 is predicted by the controller 130A, 130B with the one of the forecasting models 110A-110n of the plurality of forecasting models 109A, 109B (Fig. 2, Block 240), wherein the one of the plurality of forecasting models 109A, 109B predicts the predetermined characteristic 180 on which at least a portion of an aircraft flight plan 181 and/or weather forecast 182 is based.

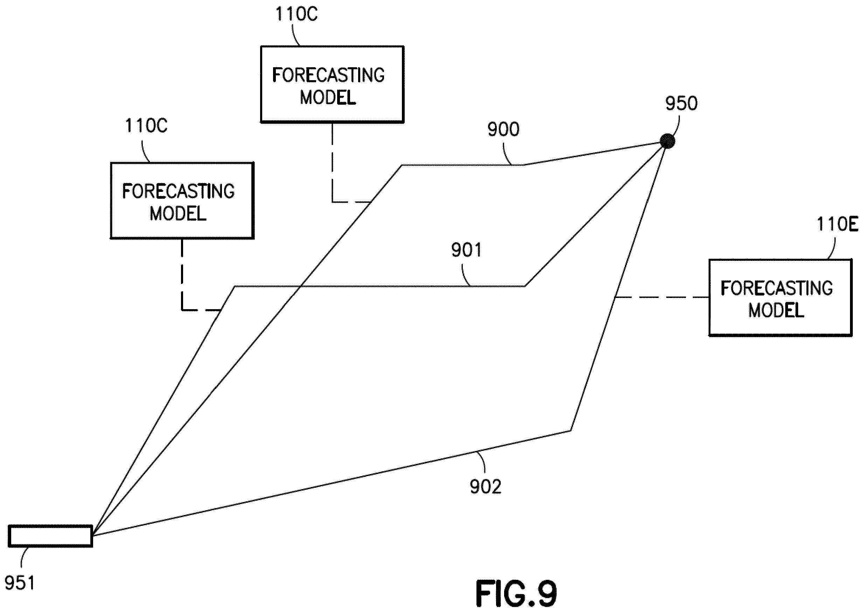

Referring now to Figs. 1A, 2, and 9 an example of flight path prediction will be described. Here at least one of the forecasting models 110A-110n is trained (Fig. 2, Block 200) using the training data 150 in any suitable manner to predict at least one flight path 900-902 of the aircraft 198 between a start point 950 and an end point 951. As an example, there may be a forecasting model 110C, 110D, 110E corresponding to each of the possible flight paths 900-902. As noted above, common training data 150 is used to train the forecasting models 110C, 110D, 110E. A data matrix of test predictions 111A-111n is generated (Fig. 2, Block 210) for each respective forecasting model 110C, 110D, 110E using the testing data 155 as described above, where the testing data 155 used is common to all of the forecasting models 110C, 110D, 110E. In a manner similar to that described above, analysis forecast data 140 is received or otherwise obtained by the aircraft flight planning controller 130A (Fig. 2, Block 230) and compared with the test prediction data points 112A-112n of the data matrix of test predictions 111A-111n corresponding to the forecasting models 110C, 110D, 110E in the manner described above with respect to Figs. 7 and 8. Based on the comparison, the aircraft flight planning controller 130A selects the forecasting model 110C, 110D, 110E (Fig. 2, Block 230) having test prediction data points 112A-112n representative of the analysis forecast data 140 being analyzed. The aircraft flight planning controller 130A applies the selected forecasting model 110C, 110D, 110E to the analysis forecast data 140 to predict 180P the predetermined characteristic 180 (Fig. 2, Block 240) which in this example is the flight path 900-902. The selection of the forecasting model 110C, 110D, 110E and hence the flight path 900-902 may be dynamically updated as new analysis forecast data 140 is received by the aircraft flight planning controller 130A.

As described herein, with respect to both weather forecasting and flight path selection, the aircraft flight planning apparatus 100A and weather forecasting apparatus 100B may be part of an airline operations control center 199, an aircraft 198 and/or a weather forecasting center 197. Where the aircraft flight planning apparatus 100A and/or weather forecasting apparatus 100B forms part of the airline operations control center 199 and/or weather forecasting center 197, the controller 130A, 130B selects the optimal forecasting model 110A-110B with, for example the model selection module 130M, which may increase the accuracy of the prediction 180P of the predetermined characteristic 180. More accurate weather data may positively impact fight planning and dispatching, in terms of the predictability of the flights planned. Where the aircraft flight planning apparatus 100A and/or weather forecasting apparatus 100B forms part of the aircraft 198 the selection of the optimal forecasting model 110A-110B may increase flight planning effectiveness by resulting in a more cost effective optimization of flight trajectories/paths, speeds, etc. which may reduce fuel costs and reduce flight times. While aircraft 198 trajectory and cost optimization are provided as examples of how the aspects of the present disclosure may benefit air travel, the aspects of the present disclosure should not be limited thereto and may apply to other aspects of air travel such as to predictive maintenance of the aircraft 198.

The following are provided in accordance with the aspects of the present disclosure:
A1. An aircraft flight planning apparatus comprising:
   a database including
   a plurality of forecasting models configured to predict a predetermined characteristic on which at least a portion of an aircraft flight plan is based, and
   at least one data matrix of test predictions for the predetermined characteristic from each of the plurality of forecasting models, each of the at least one data matrix of test prediction includes a plurality of test prediction data points; and
   an aircraft flight planning controller coupled to the database, the aircraft flight planning controller being configured to
   receive analysis forecast data having at least one analysis data point,
   select a forecasting model, from the plurality of forecasting models, based on a comparison between the at least one analysis data point and the plurality of test prediction data points of a respective forecasting model, and
   provide a prediction of the predetermined characteristic with the forecasting model, selected from the plurality of forecasting models, that corresponds to a test prediction data point that is representative of the at least one analysis data point.
A2. The aircraft flight planning apparatus of paragraph A1, wherein the predetermined characteristic includes at least a portion of a weather forecast.
A3. The aircraft flight planning apparatus of paragraph A1, wherein the predetermined characteristic is a flight path.
A4. The aircraft flight planning apparatus of paragraph A1, wherein each of the plurality of forecasting models is configured to analyze data sets where each data point in the data sets has multiple dimensions.
A5. The aircraft flight planning apparatus of paragraph A4, wherein the multiple dimensions include one or more of at least air temperature, altitude, wind speed, wind direction, barometric pressure and humidity.
A6. The aircraft flight planning apparatus of paragraph A4, wherein the multiple dimensions include one or more of aircraft traffic flow, wind speed, wind direction, existence of extreme weather, time of day, season of the year, visibility, aircraft holding patterns, emergency situations, and accumulated flight delays.
A7. The aircraft flight planning apparatus of paragraph A1, wherein each of the plurality of forecasting models are machine learning models.
A8. The aircraft flight planning apparatus of paragraph A1, wherein each of the plurality of forecasting models is one or more of trained using training data common to all of the plurality of forecasting models and tested using testing data common to all of the plurality of forecasting models (i.e. they are trained and/or tested using the same data).
A9. The aircraft flight planning apparatus of paragraph A1, wherein the aircraft flight planning controller is configured to select the forecasting model by determining a test prediction data point from a plurality of test prediction data points within a respective data matrix of test predictions that is representative of the at least one analysis data point when compared to other test prediction data points of the plurality of test prediction data points.
A10. The aircraft flight planning apparatus of paragraph A9, wherein the aircraft flight planning controller is configured to determine the test prediction data point from the data matrix of test predictions that is representative of the at least one analysis data point by creating a distance matrix to identify which of the plurality of test prediction data points has a smallest distance to the at least one analysis data point.
A11. The aircraft flight planning apparatus of paragraph A1, wherein the aircraft flight planning apparatus forms a portion of an airline operations control center.
A12. The aircraft flight planning apparatus of paragraph A1, wherein the aircraft flight planning apparatus forms part of a control system onboard an aircraft.
B1. A method for aircraft flight planning, the method comprising:
   receiving, with an aircraft flight planning controller, analysis forecast data having at least one analysis data point;
   selecting, with the aircraft flight planning controller, a forecasting model, from a plurality of forecasting models, based on a comparison between the at least one analysis data point and a plurality of test prediction data points within a respective data matrix of test predictions, wherein at least one data matrix of test predictions is stored in a database accessible by the aircraft flight planning controller; and
   predicting, with the aircraft flight planning controller, a predetermined characteristic with the forecasting model selected from the plurality of forecasting models, wherein the forecasting model predicts the predetermined characteristic on which at least a portion of an aircraft flight plan is based.
B2. The method of paragraph B1, wherein the predetermined characteristic includes at least a portion of a weather forecast.
B3. The method of paragraph B1, wherein the predetermined characteristic is a flight path.
B4. The method of paragraph B1, wherein each of the plurality of forecasting models analyzes data sets where each data point in the data sets has multiple dimensions.
B5. The method of paragraph B4, wherein the multiple dimensions include one or more of at least air temperature, altitude, wind speed, wind direction, barometric pressure and humidity.
B6. The method of paragraph B4, wherein the multiple dimensions include one or more of aircraft traffic flow, wind speed, wind direction, existence of extreme weather, time of day, season of the year, visibility, aircraft holding patterns, emergency situations, and accumulated flight delays.
B7. The method of paragraph B1, wherein each of the plurality of forecasting models are machine learning models.
B8. The method of paragraph B1, further comprising one or more of training each of the plurality of forecasting models using training data common to all of the plurality of forecasting models and testing each of the plurality of forecasting models using testing data common to all of the plurality of forecasting models (i.e. they are trained and/or tested using the same data).
B9. The method of paragraph B1, wherein the forecasting model is selected by determining, with the aircraft flight planning controller, a test prediction data point from the plurality of test prediction data points within the respective data matrix of test predictions that is representative of the at least one analysis data point when compared to other test prediction data points of the plurality of test prediction data points.
B10. The method of paragraph B9, wherein the test prediction data point from the data matrix of test predictions that is representative of the at least one analysis data point is determined by creating a distance matrix to identify which of the plurality of test prediction data points has a smallest distance to the at least one analysis data point.
B11. The method of paragraph B1, further comprising periodically re-training the plurality of forecasting models.
C1. A method for aircraft flight planning, the method comprising:
   training a plurality of forecasting models, with common training data, where each of the plurality of forecasting models is stored in a database and trained to predict a predetermined characteristic on which at least a portion of an aircraft flight plan is based;
   determining at least one data matrix of test predictions for the predetermined characteristic from each of the plurality of forecasting models, the at least one data matrix of test predictions being stored in the database;
   receiving, with an aircraft flight planning controller, analysis forecast data having at least one analysis data point;
   determining, with the aircraft flight planning controller, a test prediction data point from a plurality of test prediction data points within a respective data matrix of test predictions that is representative of the at least one analysis data point when compared to other test prediction data points of the plurality of test prediction data points, wherein at least one data matrix of test predictions is accessible by the aircraft flight planning controller so that one of the plurality of forecasting models, that corresponds to the test prediction data point that is representative of the at least one analysis data point, is dynamically determined as updated analysis forecast data is received by the aircraft flight planning controller; and
   predicting, with the aircraft flight planning controller, the predetermined characteristic with the one of the plurality of forecasting models, wherein the one of the plurality of forecasting models predicts the predetermined characteristic on which at least a portion of an aircraft flight plan is based.
C2. The method of paragraph C1, wherein the predetermined characteristic includes at least a portion of a weather forecast.
C3. The method of paragraph C1, wherein the predetermined characteristic is a flight path.
C4. The method of paragraph C1, wherein each of the plurality of forecasting models analyzes data sets where each data point in the data sets has multiple dimensions.
C5. The method of paragraph C4, wherein the multiple dimensions include one or more of at least air temperature, altitude, wind speed, wind direction, barometric pressure and humidity.
C6. The method of paragraph C4, wherein the multiple dimensions include one or more of aircraft traffic flow, wind speed, wind direction, existence of extreme weather, time of day, season of the year, visibility, aircraft holding patterns, emergency situations, and accumulated flight delays.
C7. The method of paragraph C1, wherein each of the plurality of forecasting models are machine learning models.
C8. The method of paragraph C1, wherein the test prediction data point from the data matrix of test predictions that is representative of the at least one analysis data point is determined by creating a distance matrix to identify which of the plurality of test prediction data points has a smallest distance to the at least one analysis data point.
C9. The method of paragraph C1, further comprising periodically re-training the plurality of forecasting models.
C10. The method of paragraph C1, further comprising testing each of the plurality of forecasting models using testing data common to all of the plurality of forecasting models.
D1. An aircraft flight planning apparatus comprising:
   a database including
   a plurality of forecasting models configured to predict at least one predetermined characteristic on which at least a portion of an aircraft flight plan is based, and
   at least one data matrix of test predictions for the at least one predetermined characteristic from each of the plurality of forecasting models, each of the at least one data matrix of test predictions includes a plurality of test prediction data points; and
   an aircraft flight planning controller coupled to the database, the aircraft flight planning controller being configured to
   receive analysis forecast data having at least a first analysis data point and a second analysis data point;
   determine a test prediction data point from a plurality of test prediction data points within a respective data matrix of test predictions that is representative of the first analysis data point when compared to other test prediction data points of the plurality of test prediction data points; and
   provide a prediction of the at least one of the predetermined characteristic with a forecasting model, of the plurality of forecasting models, that corresponds to the test prediction data point that is representative of the first analysis data point.
D2. The aircraft flight planning apparatus of paragraph D1, wherein the aircraft flight planning controller is further configured to
   determine a test prediction data point from a plurality of test prediction data points within a respective data matrix of test predictions that is representative of the second analysis data point when compared to other test prediction data points of the plurality of test prediction data points; and
   provide a prediction of the at least one of the predetermined characteristic with a forecasting model, of the plurality of forecasting models, that corresponds to the test prediction data point that is representative of the second analysis data point.
D3. The aircraft flight planning apparatus of paragraph D2, wherein the forecasting model that corresponds to the test prediction data point that is representative of the second analysis data point is the same as the a forecasting model that corresponds to the test prediction data point that is representative of the first analysis data point.
D4. The aircraft flight planning apparatus of paragraph D2, wherein the forecasting model that corresponds to the test prediction data point that is representative of the second analysis data point is different than the a forecasting model that corresponds to the test prediction data point that is representative of the first analysis data point.
D5. The aircraft flight planning apparatus of paragraph D1, wherein the at least one predetermined characteristic includes at least a portion of a weather forecast.
D6. The aircraft flight planning apparatus of paragraph D1, wherein the at least one predetermined characteristic is a flight path.
D7. The aircraft flight planning apparatus of paragraph D1, wherein each of the plurality of forecasting models is configured to analyze data sets where each data point in the data sets has multiple dimensions.
D8. The aircraft flight planning apparatus of paragraph D7, wherein the multiple dimensions include one or more of at least air temperature, altitude, wind speed, wind direction, barometric pressure and humidity.
D9. The aircraft flight planning apparatus of paragraph D7, wherein the multiple dimensions include one or more of aircraft traffic flow, wind speed, wind direction, existence of extreme weather, time of day, season of the year, visibility, aircraft holding patterns, emergency situations, and accumulated flight delays.
D10. The aircraft flight planning apparatus of paragraph D1, wherein each of the plurality of forecasting models are machine learning models.
D11. The aircraft flight planning apparatus of paragraph D1, wherein each of the plurality of forecasting models is one or more of trained using training data common to all of the plurality of forecasting models and tested using testing data common to all of the plurality of forecasting models (i.e. they are trained and/or tested using the same data).
D12. The aircraft flight planning apparatus of paragraph D1, wherein the aircraft flight planning controller is configured to determine the test prediction data point from the data matrix of test predictions that is representative of the first analysis data point by creating a distance matrix to identify which of the plurality of test prediction data points has a smallest distance to the first analysis data point.
D13. The aircraft flight planning apparatus of paragraph D1, wherein the aircraft flight planning apparatus forms a portion of an airline operations control center.
D14. The aircraft flight planning apparatus of paragraph D1, wherein the aircraft flight planning apparatus forms part of a control system onboard an aircraft.
E1. A weather forecasting apparatus comprising:
   a database including
   a plurality of forecasting models configured to predict a predetermined characteristic on which at least a portion of a weather forecast is based,
   at least one data matrix of test predictions for the predetermined characteristic from each of the plurality of forecasting models; and
   a weather forecasting controller coupled to the database, the weather forecasting controller being configured to
   receive analysis forecast data having at least one analysis data point,
   select a forecasting model, from the plurality of forecasting models, based on a comparison between the at least one analysis data point and the plurality of test prediction data points, and
   provide a prediction of the predetermined characteristic with the forecasting model, from the plurality of forecasting models, that corresponds to the test prediction data point that is representative of the at least one analysis data point.
E2. The weather forecasting apparatus of paragraph E1, wherein the predetermined characteristic includes one or more of at least air temperature, altitude, wind speed, wind direction, barometric pressure and humidity.
E3. The weather forecasting apparatus of paragraph E1, wherein the weather forecast is determinative of a flight path for an aircraft.
E4. The weather forecasting apparatus of paragraph E1, wherein each of the plurality of forecasting models is configured to analyze data sets where each data point in the data sets has multiple dimensions.
E5. The weather forecasting apparatus of paragraph E4, wherein the multiple dimensions include one or more of wind speed, wind direction, air temperature, altitude, wind speed, wind direction, barometric pressure, and humidity.
E6. The weather forecasting apparatus of paragraph E1, wherein each of the plurality of forecasting models are machine learning models.
E7. The weather forecasting apparatus of paragraph E1, wherein each of the plurality of forecasting models is one or more of trained using training data common to all of the plurality of forecasting models and tested using testing data common to all of the plurality of forecasting models (i.e. they are trained and/or tested using the same data).
E8. The weather forecasting apparatus of paragraph E1, wherein the aircraft flight planning controller is configured to select the forecasting model by determining a test prediction data point from a plurality of test prediction data points within a respective data matrix of test predictions that is representative of the at least one analysis data point when compared to other test prediction data points of the plurality of test prediction data points.
E9. The weather forecasting apparatus of paragraph E8, wherein the aircraft flight planning controller is configured to determine the test prediction data point from the data matrix of test predictions that is representative of the at least one analysis data point by creating a distance matrix to identify which of the plurality of test prediction data points has a smallest distance to the at least one analysis data point.
E10. The weather forecasting apparatus of paragraph E1, wherein the weather forecasting apparatus forms a portion of an airline operations control center.
E11. The weather forecasting apparatus of paragraph E1, wherein the weather forecasting apparatus forms part of a control system onboard an aircraft.
F1. A method for weather forecasting, the method comprising:
   receiving, with a weather forecasting controller, analysis forecast data having at least one analysis data point;
   selecting, with the weather forecasting controller, a forecasting model, from a plurality of forecasting models, based on a comparison between the at least one analysis data point and a plurality of test prediction data points within a respective data matrix of test predictions, wherein at least one data matrix of test predictions is stored in a database accessible by the weather forecasting controller; and
   predicting, with the weather forecasting controller, a predetermined characteristic with the forecasting model, wherein the forecasting model predicts the predetermined characteristic on which at least a portion of a weather forecast is based.
F2. The method of paragraph F1, wherein the predetermined characteristic includes one or more of at least air temperature, altitude, wind speed, wind direction, barometric pressure and humidity.
F3. The method of paragraph F1, further comprising determining a flight path of an aircraft based on the weather forecast.
F4. The method of paragraph F1, wherein each of the plurality of forecasting models analyzes data sets where each data point in the data sets has multiple dimensions.
F5. The method of paragraph F4, wherein the multiple dimensions include one or more of wind speed, wind direction, air temperature, altitude, wind speed, wind direction, barometric pressure, and humidity.
F6. The method of paragraph F1, wherein each of the plurality of forecasting models are machine learning models.
F7. The method of paragraph F1, further comprising one or more of training each of the plurality of forecasting models using training data common to all of the plurality of forecasting models and testing each of the plurality of forecasting models using testing data common to all of the plurality of forecasting models (i.e. they are trained and/or tested using the same data).
F8. The method of paragraph F1, wherein the forecasting model is selected by determining, with the weather forecasting controller, a test prediction data point from the plurality of test prediction data points within the respective data matrix of test predictions that is representative of the at least one analysis data point when compared to other test prediction data points of the plurality of test prediction data points.
F9. The method of paragraph F8, wherein the test prediction data point from the data matrix of test predictions that is representative of the at least one analysis data point is determined by creating a distance matrix to identify which of the plurality of test prediction data points has a smallest distance to the at least one analysis data point.
F10. The method of paragraph F1, further comprising periodically re-training the plurality of forecasting models.
G1. A method for forecasting weather, the method comprising:
   training a plurality of forecasting models, with common training data, where each of the plurality of forecasting models is stored in a database and trained to predict a predetermined characteristic on which at least a portion of a weather forecast is based;
   determining at least one data matrix of test predictions for the predetermined characteristic from each of the plurality of forecasting models, the at least one data matrix of test predictions being stored in the database;
   receiving, with a weather forecasting controller, analysis forecast data having at least one analysis data point;
   determining, with the weather forecasting controller, a test prediction data point from a plurality of test prediction data points within a respective data matrix of test predictions that is representative of the at least one analysis data point when compared to other test prediction data points of the plurality of test prediction data points, wherein at least one data matrix of test predictions is accessible by the weather forecasting controller so that one of the plurality of forecasting models, that corresponds to the test prediction data point that is representative of the at least one analysis data point, is dynamically determined as updated analysis forecast data is received by the weather forecasting controller; and
   predicting, with the weather forecasting controller, the predetermined characteristic with the one of the plurality of forecasting models, wherein the one of the plurality of forecasting models predicts the predetermined characteristic on which at least a portion of a weather forecast is based.
G2. The method of paragraph G1, wherein the predetermined characteristic includes one or more of at least air temperature, altitude, wind speed, wind direction, barometric pressure and humidity.
G3. The method of paragraph G1, further comprising determining a flight path of an aircraft based on the weather forecast.
G4. The method of paragraph G1, wherein each of the plurality of forecasting models analyzes data sets where each data point in the data sets has multiple dimensions.
G5. The method of paragraph G4, wherein the multiple dimensions include one or more of wind speed, wind direction, air temperature, altitude, wind speed, wind direction, barometric pressure, and humidity.
G6. The method of paragraph G1, wherein each of the plurality of forecasting models are machine learning models.
G7. The method of paragraph G1, wherein the test prediction data point from the data matrix of test predictions that is representative of the at least one analysis data point is determined by creating a distance matrix to identify which of the plurality of test prediction data points has a smallest distance to the at least one analysis data point.
G8. The method of paragraph G1, further comprising periodically re-training the plurality of forecasting models.
G9. The method of paragraph G1, further comprising testing each of the plurality of forecasting models using testing data common to all of the plurality of forecasting models.

Further, the disclosure comprises embodiments according to the following clauses:
1. An aircraft flight planning apparatus comprising:
   a database including
      a plurality of forecasting models configured to predict a predetermined characteristic on which at least a portion of an aircraft flight plan is based, and
      at least one data matrix of test predictions for the predetermined characteristic from each of the plurality of forecasting models, each of the at least one data matrix of test prediction includes a plurality of test prediction data points; and
   an aircraft flight planning controller coupled to the database, the aircraft flight planning controller being configured to
      receive analysis forecast data having at least one analysis data point,
      select a forecasting model, from the plurality of forecasting models, based on a comparison between the at least one analysis data point and the plurality of test prediction data points of a respective forecasting model, and
      provide a prediction of the predetermined characteristic with the forecasting model, selected from the plurality of forecasting models, that corresponds to a test prediction data point that is representative of the at least one analysis data point.
Clause 2. The aircraft flight planning apparatus of clause 1, wherein the predetermined characteristic includes at least a portion of a weather forecast.
Clause 3. The aircraft flight planning apparatus of any one of clauses 1-2, wherein the predetermined characteristic is a flight path.
Clause 4. The aircraft flight planning apparatus of any one of clauses 1-3, wherein each of the plurality of forecasting models are machine learning models.
Clause 5. The aircraft flight planning apparatus of any one of clauses 1-4, wherein each of the plurality of forecasting models is one or more of trained and tested using training data common to all of the plurality of forecasting models.
Clause 6. The aircraft flight planning apparatus of any one of clauses 1-5, wherein the aircraft flight planning controller is configured to select the forecasting model by determining a test prediction data point from a plurality of test prediction data points within a respective data matrix of test predictions that is representative of the at least one analysis data point when compared to other test prediction data points of the plurality of test prediction data points.
Clause 7. The aircraft flight planning apparatus of clause 6, wherein the aircraft flight planning controller is configured to determine the test prediction data point from the data matrix of test predictions that is representative of the at least one analysis data point by creating a distance matrix to identify which of the plurality of test prediction data points has a smallest distance to the at least one analysis data point.
Clause 8. A method for aircraft flight planning, the method comprising:
   receiving, with an aircraft flight planning controller, analysis forecast data having at least one analysis data point;
   selecting, with the aircraft flight planning controller, a forecasting model, from a plurality of forecasting models, based on a comparison between the at least one analysis data point and a plurality of test prediction data points within a respective data matrix of test predictions, wherein at least one data matrix of test predictions is stored in a database accessible by the aircraft flight planning controller; and
   predicting, with the aircraft flight planning controller, a predetermined characteristic with the forecasting model selected from the plurality of forecasting models, wherein the forecasting model predicts the predetermined characteristic on which at least a portion of an aircraft flight plan is based.
Clause 9. The method of clause 8, wherein each of the plurality of forecasting models analyzes data sets where each data point in the data sets has multiple dimensions.
Clause 10. The method of clause 9, wherein the multiple dimensions include one or more of at least air temperature, altitude, wind speed, wind direction, barometric pressure and humidity.
Clause 11. The method of any one of clauses 9-10, wherein the multiple dimensions include one or more of aircraft traffic flow, wind speed, wind direction, existence of extreme weather, time of day, season of the year, visibility, aircraft holding patterns, emergency situations, and accumulated flight delays.
Clause 12. The method of any one of clauses 8-11, further comprising training each of the plurality of forecasting models using training data common to all of the plurality of forecasting models.
Clause 13. The method of any one of clauses 8-12, wherein the forecasting model is selected by determining, with the aircraft flight planning controller, a test prediction data point from the plurality of test prediction data points within the respective data matrix of test predictions that is representative of the at least one analysis data point when compared to other test prediction data points of the plurality of test prediction data points.
Clause 14. The method of clause 13, wherein the test prediction data point from the data matrix of test predictions that is representative of the at least one analysis data point is determined by creating a distance matrix to identify which of the plurality of test prediction data points has a smallest distance to the at least one analysis data point.
Clause 15. A method for aircraft flight planning, the method comprising:
   training a plurality of forecasting models, with common training data, where each of the plurality of forecasting models is stored in a database and trained to predict a predetermined characteristic on which at least a portion of an aircraft flight plan is based;
   determining at least one data matrix of test predictions for the predetermined characteristic from each of the plurality of forecasting models, the at least one data matrix of test predictions being stored in the database;
   receiving, with an aircraft flight planning controller, analysis forecast data having at least one analysis data point;
   determining, with the aircraft flight planning controller, a test prediction data point from a plurality of test prediction data points within a respective data matrix of test predictions that is representative of the at least one analysis data point when compared to other test prediction data points of the plurality of test prediction data points, wherein at least one data matrix of test predictions is accessible by the aircraft flight planning controller so that one of the plurality of forecasting models, that corresponds to the test prediction data point that is representative of the at least one analysis data point, is dynamically determined as updated analysis forecast data is received by the aircraft flight planning controller; and
   predicting, with the aircraft flight planning controller, the predetermined characteristic with the one of the plurality of forecasting models, wherein the one of the plurality of forecasting models predicts the predetermined characteristic on which at least a portion of an aircraft flight plan is based.
Clause 16. The method of clause 15, wherein the predetermined characteristic includes at least a portion of a weather forecast.
Clause 17. The method of any one of clauses 15-16, wherein the predetermined characteristic is a flight path.
Clause 18. The method of any one of clauses 15-17, wherein each of the plurality of forecasting models analyzes data sets where each data point in the data sets has multiple dimensions.
Clause 19. The method of any one of clauses 15-18, wherein the test prediction data point from the data matrix of test predictions that is representative of the at least one analysis data point is determined by creating a distance matrix to identify which of the plurality of test prediction data points has a smallest distance to the at least one analysis data point.
Clause 20. The method of any one of clauses 15-19, further comprising periodically re-training the plurality of forecasting models.

In the figures, referred to above, solid lines, if any, connecting various elements and/or components may represent mechanical, electrical, fluid, optical, electromagnetic, wireless and other couplings and/or combinations thereof. As used herein, "coupled" means associated directly as well as indirectly. For example, a member A may be directly associated with a member B, or may be indirectly associated therewith, e.g., via another member C. It will be understood that not all relationships among the various disclosed elements are necessarily represented. Accordingly, couplings other than those depicted in the drawings may also exist. Dashed lines, if any, connecting blocks designating the various elements and/or components represent couplings similar in function and purpose to those represented by solid lines; however, couplings represented by the dashed lines may either be selectively provided or may relate to alternative examples of the present disclosure. Likewise, elements and/or components, if any, represented with dashed lines, indicate alternative examples of the present disclosure. One or more elements shown in solid and/or dashed lines may be omitted from a particular example without departing from the scope of the present disclosure. Environmental elements, if any, are represented with dotted lines. Virtual (imaginary) elements may also be shown for clarity. Those skilled in the art will appreciate that some of the features illustrated in the figures, may be combined in various ways without the need to include other features described in the figures, other drawing figures, and/or the accompanying disclosure, even though such combination or combinations are not explicitly illustrated herein. Similarly, additional features not limited to the examples presented, may be combined with some or all of the features shown and described herein.

In Figs. 2 and 7, referred to above, the blocks may represent operations and/or portions thereof and lines connecting the various blocks do not imply any particular order or dependency of the operations or portions thereof. Blocks represented by dashed lines indicate alternative operations and/or portions thereof. Dashed lines, if any, connecting the various blocks represent alternative dependencies of the operations or portions thereof. It will be understood that not all dependencies among the various disclosed operations are necessarily represented. Figs. 2 and 7 and the accompanying disclosure describing the operations of the method(s) set forth herein should not be interpreted as necessarily determining a sequence in which the operations are to be performed. Rather, although one illustrative order is indicated, it is to be understood that the sequence of the operations may be modified when appropriate. Accordingly, certain operations may be performed in a different order or simultaneously. Additionally, those skilled in the art will appreciate that not all operations described need be performed.

In the foregoing description, numerous specific details are set forth to provide a thorough understanding of the disclosed concepts, which may be practiced without some or all of these particulars. In other instances, details of known devices and/or processes have been omitted to avoid unnecessarily obscuring the disclosure. While some concepts will be described in conjunction with specific examples, it will be understood that these examples are not intended to be limiting.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

Reference herein to "one example" means that one or more feature, structure, or characteristic described in connection with the example is included in at least one implementation. The phrase "one example" in various places in the specification may or may not be referring to the same example.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

Different examples of the apparatus(es) and method(s) disclosed herein include a variety of components, features, and functionalities. It should be understood that the various examples of the apparatus(es) and method(s) disclosed herein may include any of the components, features, and functionalities of any of the other examples of the apparatus(es) and method(s) disclosed herein in any combination, and all of such possibilities are intended to be within the scope of the present disclosure.

Many modifications of examples set forth herein will come to mind to one skilled in the art to which the present disclosure pertains having the benefit of the teachings presented in the foregoing descriptions and the associated drawings.

Therefore, it is to be understood that the present disclosure is not to be limited to the specific examples illustrated and that modifications and other examples are intended to be included within the scope of the appended claims. Moreover, although the foregoing description and the associated drawings describe examples of the present disclosure in the context of certain illustrative combinations of elements and/or functions, it should be appreciated that different combinations of elements and/or functions may be provided by alternative implementations without departing from the scope of the appended claims. Accordingly, parenthetical reference numerals in the appended claims, if any, are presented for illustrative purposes only and are not intended to limit the scope of the claimed subject matter to the specific examples provided in the present disclosure.

## Claims

1. An aircraft flight planning apparatus (100A) comprising:
a database (105A) including
a plurality of forecasting models (109A) configured to predict a predetermined characteristic (180) on which at least a portion of an aircraft flight plan (181) is based, and
at least one data matrix of test predictions (111A-111n) for the predetermined characteristic (180) from each of the plurality of forecasting models (109A), each of the at least one data matrix of test prediction (111A-111n) includes a plurality of test prediction data points (112A-112n); and
an aircraft flight planning controller (130A) coupled to the database (105A), the aircraft flight planning controller (130A) being configured to
receive analysis forecast data (140) having at least one analysis data point (141A-141n),
select a forecasting model (110A-110n), from the plurality of forecasting models (109A), based on a comparison between the at least one analysis data point (141A-141n) and the plurality of test prediction data points (112A-112n) of a respective forecasting model (110A-110n), and
provide a prediction (180P) of the predetermined characteristic (180) with the forecasting model (110A-110n), selected from the plurality of forecasting models (109A), that corresponds to a test prediction data point (112A-112n) that is representative of the at least one analysis data point (141A-141n).

2. The aircraft flight planning apparatus (100A) of claim 1, wherein the predetermined characteristic (180) includes at least a portion of a weather forecast (182).

3. The aircraft flight planning apparatus (100A) of any one of claims 1-2, wherein the predetermined characteristic (180) is a flight path (900-902).

4. The aircraft flight planning apparatus (100A) of any one of claims 1-3, wherein each of the plurality of forecasting models (109A) are machine learning models.

5. The aircraft flight planning apparatus (100A) of any one of claims 1-4, wherein each of the plurality of forecasting models (109A) is one or more of trained and tested using training data (150) common to all of the plurality of forecasting models (109A).

6. The aircraft flight planning apparatus (100A) of any one of claims 1-5, wherein the aircraft flight planning controller (130A) is configured to select the forecasting model (110A-110n) by determining a test prediction data point (112A-112n) from a plurality of test prediction data points (112A-112n) within a respective data matrix of test predictions (111A-111n) that is representative of the at least one analysis data point (141A-141n) when compared to other test prediction data points (112A-112n) of the plurality of test prediction data points (112A-112n).

7. The aircraft flight planning apparatus (100A) of claim 6, wherein the aircraft flight planning controller (130A) is configured to determine the test prediction data point (112A-112n) from the data matrix of test predictions (111A-111n) that is representative of the at least one analysis data point (141A-141n) by creating a distance matrix (160) to identify which of the plurality of test prediction data points (112A-112n) has a smallest distance to the at least one analysis data point (141A-141n).

8. A method for aircraft flight planning, the method comprising:
receiving, with an aircraft flight planning controller (130A), analysis forecast data (140) having at least one analysis data point (141A-141n);
selecting, with the aircraft flight planning controller (130A), a forecasting model (110A-110n), from a plurality of forecasting models (109A), based on a comparison between the at least one analysis data point (141A-141n) and a plurality of test prediction data points (112A-112n) within a respective data matrix of test predictions (111A-111n), wherein at least one data matrix of test predictions (111A-111n) is stored in a database (105A) accessible by the aircraft flight planning controller (130A); and
predicting, with the aircraft flight planning controller (130A), a predetermined characteristic (180) with the forecasting model (110A-110n) selected from the plurality of forecasting models (109A), wherein the forecasting model (110A-110n) predicts the predetermined characteristic (180) on which at least a portion of an aircraft flight plan (181) is based.

9. The method of claim 8, wherein each of the plurality of forecasting models (109A) analyzes data sets (140, 150, 155) where each data point (141A-141n, 151A-151n, 156) in the data sets (140, 150, 155) has multiple dimensions (D1-Dn).

10. The method of claim 9, wherein the multiple dimensions (D1-Dn) include one or more of at least air temperature, altitude, wind speed, wind direction, barometric pressure and humidity.

11. The method of any one of claims 9-10, wherein the multiple dimensions (D1-Dn) include one or more of aircraft traffic flow, wind speed, wind direction, existence of extreme weather, time of day, season of the year, visibility, aircraft holding patterns, emergency situations, and accumulated flight delays.

12. The method of any one of claims 8-11, further comprising training each of the plurality of forecasting models (109A) using training data (150) common to all of the plurality of forecasting models (190A).

13. The method of any one of claims 8-12, wherein the forecasting model (110A-110n) is selected by determining, with the aircraft flight planning controller (130A), a test prediction data point (112A-112n) from the plurality of test prediction data points (112A-112n) within the respective data matrix of test predictions (111A-111n) that is representative of the at least one analysis data point (141A-141n) when compared to other test prediction data points (112A-112n) of the plurality of test prediction data points (112A-112n).

14. The method of claim 13, wherein the test prediction data point (112A-112n) from the data matrix of test predictions (111A-111n) that is representative of the at least one analysis data point (141A-141n) is determined by creating a distance matrix (160) to identify which of the plurality of test prediction data points (112A-112n) has a smallest distance to the at least one analysis data point (141A-141n).
